# EUROPEAN PATENT APPLICATION

(11) **EP 3 827 671 A1**
(43) Date of publication of application: **02.06.2021**
(21) Application number: 18928051.4
(22) Date of filing: 17.10.2018
(51) Int. Cl.: A23K 50/75, A23K 10/30, A23L 15/00

(54) **FUNCTIONAL CHICKEN EGGS AND METHOD FOR PRODUCING SAME**

(30) Priority: 26.07.2018 JP 2018140323
(71) Applicant: Origin Biotechnology Kabushikikaisha, Minamisaku-gun, Nagano 384-0503 (JP)
(72) Inventor: ABE, Kazunari, Minamisaku-gun, Nagano 384-0503 (JP); OHSHIMA, Toshiaki, Tokyo 108-8477 (JP)
(74) Representative: Samson & Partner Patentanwälte mbB
(86) International application number: PCT/JP2018/038617
(87) International publication number: WO 2020/021734

(57) **Abstract**

[Problem] To provide functional chicken eggs that exhibit an effect for improving liver function by feeding Chickens a feedstock that contains ergothioneine and includes all useful components from the fruiting bodies of mushrooms.

[Solution] Provided are: functional chicken eggs produced from chickens that have been fed a feedstock that contains ergotioneine,Wherein the eggs include 5-20 ug/g of ergotioneine and also include reduced nicotinamide adenine Dinucleotide (NADH) and a method for producing the functional chicken eggs.

## Description

### TECHNICAL FIELD

The present invention relates to the functional chicken egg containing ergothioneine, NADH and the like and method for producing the chicken egg.

### BACKGROUND ART

Chicken eggs are widely popular and eaten in daily meals as an important protein source in the dietary life. It is known that chickens fed a feed lay eggs that exert a unique effect, the feed has feed for chickens whose feedstocks and components are increased or decreased or contains various feedstocks and components that are not originally contained in chicken eggs, it has been reported that functional substances and components derived from these feedstocks and components are accumulated in eggs.

Eggs fortified with nutrients, eggs having the effect of reducing the onset of allergies and eggs containing ergothioneine and exerting antioxidant power have been developed and are widely known. Such the chicken egg is referred to as a "functional chicken egg" in the description of the present invention.

Patent references 1 to 3 are known techniques for the functional chicken egg. Patent reference 1 discloses the functional egg containing 0.5 mg or more of cryptoxanthin per 100 g of an edible portion of the egg, and Patent reference 2 discloses a vitamin-enriched chicken egg in which vitamin D and vitamin K are simultaneously enriched. Patent reference 3 discloses chicken eggs produced by feeding chickens with a feed mixing seaweed containing a large amount of fucoxanthin, the eggs have an anti-obesity function and a weight increase function excluding fat that increases body weight excluding fat by containing fucoxanthinol and amaroxanthin A. However, in Patent reference 3, although fucoxanthinol and amarousiaxanthin A are contained in chicken eggs, the eggs do not have antioxidant power to eliminate active oxygen.

Further, there are Patent references 4 to 7 as prior references that have already been patented. Patent reference 4 discloses a folic acid-enriched egg containing 60 to 107 µg of folic acid and 80 to 250 IU of vitamin D per egg, the eggs with a high folic acid content are produced by feeding chickens with a feed containing folic acid coated with fats and oils. Patent reference 5 discloses chicken eggs and the like that reduce or eliminate the onset of allergies to the human body, the eggs with a serine protease inhibitor content of 0.015% or less, the eggs are used in which chickens are allowed to ingest activated water irradiated with infrared rays of a certain wavelength for a period of 3 months or more to lay eggs. These Patent references 1 to 5 disclose chicken eggs containing functional components and substances, but none of these references relate to chicken eggs containing ergothioneine.

As a prior reference of a chicken egg containing ergothioneine, there is Patent reference 6 proposed by the present applicant. Patent reference 6 discloses a chicken egg having an egg white containing 5 to 13 µg / g of ergothioneine and an egg yolk containing 3 to 13 µg / g of ergothioneine, and the chicken egg in which the ergothioneine contained in the egg white has a radical scavenging ability 1.4 times or more per unit weight as compared with the ergothioneine contained in the yolk. Here, chicken eggs containing ergothioneine are obtained by concentrating the extract of the waste medium used for mushroom production and feeding the chickens.

Further, Patent reference 7 discloses a method for fermentative production of ergothioneine. It is possible to produce ergothioneine in large quantities at low cost using microorganisms that overexpress the ergothioneine biosynthesis gene makes. However, the ergothioneine obtained here has a risk of being contaminated with impurities during manufacturing, there was a problem that humans eat directly from a safety point of view. Further, Patent reference 7 does not disclose chicken feed or chicken eggs.

### PRIOR ART REFERENCE

### PATENT REFERENCE

Patent reference 1: Japanese Unexamined Patent Application Publication No. 2003-52338
Patent reference 2: Japanese Unexamined Patent Application Publication No. H10-56978
Patent reference 3: Japanese Unexamined Patent Application Publication No. 2017-176171
Patent reference 4: Japanese Patent No. 4684360
Patent reference 5: Japanese Patent No. 3627219
Patent reference 6: Japanese Patent No. 5832707
Patent reference 7: Japanese Patent No. 6263672

### SUMMARY OF INVENTION

### PROBLEM TO BE SOLVED BY INVENTION

In recent years, it has been known that excess active oxygen in the human body adversely affects the human body, in Patent reference 3 described above, the chicken egg contains fucoxanthinol and amarousiaxanthin A, but does not have an antioxidant power for scavenging active oxygen.

The ergothioneine-containing chicken egg produced by concentrating the extract of the waste medium of the Flammulina velutipes and feeding the chicken proposed in Patent reference 6 has the antioxidant power for scavenging active oxygen. However, since the waste medium of the Flammulina velutipes contains only a small amount of ergothioneine as compared with fruiting bodies, extraction and concentration require a large cost, and the waste medium contains unnecessary components such as pH regulators that are unnecessary for living organisms, further, since the waste medium does not contain fruiting bodies, there is the problem that useful components contained in fruiting bodies of mushrooms are not fed to chickens.

The present invention has been made to solve the above problems, the object of the present invention is to provide the functional chicken egg that contains the high concentration of ergothioneine without containing unnecessary components for chickens, and exerts an effect of improving liver function and the like by feeding chickens with the feedstock containing all the useful ingredients of mushroom fruiting bodies

### MEANS FOR SOLVING PROBLEM

The present inventors focused on mushrooms that are edible fruiting bodies and contain a large amount of ergothioneine, and have developed a method for efficiently concentrating the components of the edible portion without damaging them. As a result of feeding chickens with the concentrate of this mushroom fruiting body, the present inventors have found that chicken eggs contain a large amount of ergothioneine, which is not contained in chicken eggs fed with a general feed, and NADH, which promotes the efficiency of energy production in the human body. As a result of conducting the test using this chicken egg, it was confirmed that this chicken egg has the effect of improving liver function and the like, and the present invention was reached.

The present invention is a functional chicken egg produced from a chicken that has been fed a feedstock containing ergothioneine, the egg contains 5-20 µ/g of the ergothioneine and reduced nicotinamide adenine dinucleotide (NADH). The feedstock according to the present invention is dried and pulverized fruiting body of an edible mushroom. The feedstock according to the present invention may be any of dried and pulverized fruiting body of an edible mushroom and a Pleurotus cornucopiae extract concentrate solution containing ergothioneine obtained by concentrating a residual liquid used in the production of boiled Pleurotus cornucopiae 5 to 9 times, the fruiting body and ergothioneine-containing product produced using microorganism other than the fruiting body, and the fruiting body and artificially synthesized ergothioneine-containing product.

The edible mushroom used in the present invention is a mushroom consisting of any one or more combinations selected from a Pleurotus cornucopiae, a Flammulina velutipes, a Pleurotus eryngii and a Lentinula edodes. Egg white and egg yolk of the functional chicken egg in the present invention may be freeze-dried and pulverized powders. The functional chicken egg and powdered chicken egg of the present invention are suitable for food by people with liver dysfunction, a processed food made from these can be used.

A method for producing a functional chicken egg in the present invention comprises the steps of producing a mixed feed in which 1 g to 5 g of a feedstock containing ergothioneine is mixed with 110 g of a general feed for a chicken, the feedstock containing ergothioneine obtained by drying and pulverizing fruiting body of an edible mushroom, and feeding the mixed feed to the chicken every day for 36 days or longer to obtain a chicken egg containing 5-20 µ/g of the ergothioneine and reduced nicotinamide adenine dinucleotide (NADH). A method for producing a functional chicken egg in the present invention comprises the steps of producing a mixed feed in which 1 g to 5 g of a feedstock containing ergothioneine is mixed with 110 g of a general feed for a chicken, the feedstock containing ergothioneine obtained by drying and pulverizing fruiting body of an edible mushroom, producing a mixed feed in which 2 cc to 4 cc of a Pleurotus cornucopiae extract concentrate solution is mixed with 110 g of a general feed for a chicken, the Pleurotus cornucopiae extract concentrate solution containing ergothioneine obtained by concentrating a residual liquid used in the production of boiled Pleurotus cornucopiae 5 to 9 times, and feeding each mixed feed to the chicken every day for 36 days or longer at the same time or feeding each mixed feed to the chicken separately and alternately every other day for 36 days or longer to obtain a chicken egg containing 5-20 µg/g of the ergothioneine and reduced nicotinamide adenine dinucleotide (NADH).

### EFFECT OF INVENTION

The liver function of the damaged liver is improved by eating the functional chicken egg of the present invention. When the feeding test of Test Example 1 is converted into a human, the effect of improving the liver function indexes AST and ALT can be expected by eating two functional chicken eggs of the present invention per day by a human with reduced liver function.

There are side effects when taking Silymarin, which is known as a liver function improving drug. In recent years, it has been clarified that no matter how many chicken eggs are eaten a day, there is no harm to the body, and since chicken eggs are originally human ingredients, there are no side effects even if the functional chicken eggs of the present invention are eaten. The functional chicken egg of the present invention has the effect of improving liver function without side effect, since chicken eggs are used daily as a food material, the functional chicken eggs of the present invention can be continuously and easily ingested, and thus have an effect of improving skin inflammation such as urticaria, rough hands, and dry hands.

### BRIEF DESCRIPTION OF DRAWINGS

[Fig. 1] It is a flow which shows the production procedure of the functional chicken egg according to the present invention.
[Fig. 2] It is a chart which graphed the measured value of the liver function index AST in Test Example 1.
[Fig. 3] It is a chart which graphed the measured value of the liver function index ALT in Test Example 1.

### MODES FOR CARRYING OUT INVENTION

The functional chicken egg according to the present invention (hereinafter, also simply referred to as "functional chicken egg") and the production method thereof will be described. The present invention is not limited to the examples shown here, and the examples can be appropriately modified within the scope of the technical idea of the present invention.

It is known that ergothioneine contained in the functional chicken egg has a high antioxidant effect, and exerts a function such as anti-aging by ingesting the chicken egg into the human body. In addition, it has been confirmed that mushroom fruiting bodies contain a large amount of ergothioneine, ergothioneine is transferred to the egg produced by feeding the chicken with the feedstock containing ergothioneine, and ergothioneine is taken into the body by eating the egg and accumulated in some organs.

The reduced nicotinamide adenine dinucleotide contained in the functional chicken egg is referred to as "NADH" in the description of the present invention. NADH is an electron carrier (energy carrier) used in all eukaryotes and many archaea and eubacteria, and is a useful substance that is involved as a coenzyme in many enzymes involved in the source of life activities such as glucose metabolism system and TCA cycle as a source of electrons or hydrogen atoms. NADH is one of the coenzymes called niacin that makes human skin and thoughts "normally operate", and supports the production of ATP (adenosine triphosphate) that supports muscle contraction and extension. And NADH is attracting attention as a component related to the function of the sirtuin gene (longevity gene). Such NADH is a substance that promotes the efficiency of energy production in the body.

Glycerophosphocholine contained in functional chicken eggs is a kind of naturally occurring choline derivative and is contained in the brain and milk. It is a precursor of acetylcholine that acts on the parasympathetic nerves, and is used as a treatment for Alzheimer's disease and as a growth support agent for children. Thiamine also called vitamin B1 and is classified as a water-soluble vitamin. It is a nutrient necessary for converting glucose into energy. GABA is one of the amino acids and is generally widely used as y-aminobutyric acid or 4-aminobutyric acid, which is a substance that mainly functions as an inhibitory neurotransmitter. Glycyl-glycine has the effect of suppressing inflammation of pores and reducing the opening of pores, and has the effect of exerting a high moisturizing effect and smoothing the texture of the skin.

The functional chicken egg of the present invention is produced from a chicken that has been fed a feedstock containing ergothioneine, contains 5-20 µg/g of the ergothioneine and contains NADH. The functional chicken egg of the present invention contains 1.7 to 2.3 times as much glycerophosphocholine as the general chicken egg, 1.6 to 2.2 times as much Thiamine (vitamin B1) as the general chicken egg, 1.5 to 2.1 times as much GABA as the general chicken egg, and 1.5 to 2.1 times as much glycylglycine as the general chicken eggs.

Such functional chicken egg can be used as raw materials for processed foods such as pudding, sweet bread, supplements, and mayonnaise, for example. The functional chicken egg can also be used as raw materials for cosmetics, drugs, etc., and can be expected to have an effect of improving liver dysfunction and skin inflammation. The functional chicken egg of the present invention contains NADH in addition to ergothioneine, and contains a large amount of glycerohofocolin and the like as compared with general chicken eggs in comparison with the chicken egg disclosed in Patent reference 6 proposed by the applicant. The reason is that mushroom fruiting bodies contain many useful ingredients that the fruiting bodies originally have in addition to many ergothioneine, and chicken eggs produced by feeding the feedstock containing ergothioneine and other useful ingredients.

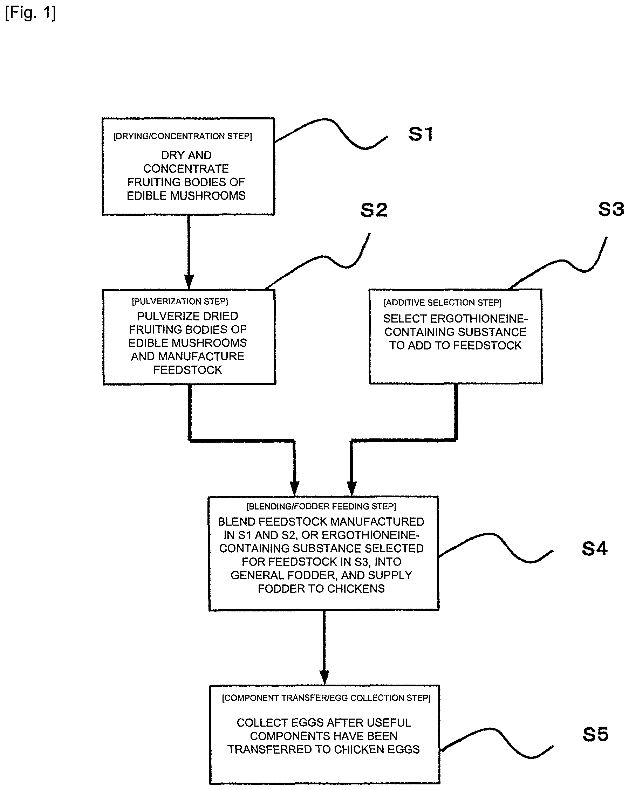

Next, the method for producing the functional chicken egg according to the present invention will be described with reference to FIG. As shown in FIG. 1, first, the feedstock to be fed to chickens is obtained (drying concentration step / step S1, pulverization step /step S2, selection step of ergothioneine-containing substance to be added to the feedstock / step S3). Next, only the feedstock obtained in steps S1 and S2 or the feedstock and the ergothioneine-containing substance selected in step S3 are blended with the general feed for chickens and fed to chickens (blending, fodder feeding step, step S4). After the useful component such as ergothioneine derived from the feedstock is transferred to and contained in the chicken egg, the egg is collected (component transfer, egg collection step / step S5).

Here, the "general feed for chickens" is a commonly used feed for chickens, and is a powdery body made from corn, soybean meal, oil cake, fish meal, and the like. The general feed for chickens used in the present invention is not limited to these, and may be feeds using various feedstocks or feeds used in general households for raising egg-collecting chickens.

In step S1, concentration by drying is adopted as a method for concentrating fruiting body of edible mushroom (hereinafter, simply referred to as "fruiting body") containing ergothioneine in the present invention. This dry concentration method is the cheapest method for concentrating fruiting body without damaging the components, the water content contained in the fruiting body is reduced by drying the fruiting body, and the useful components of the fruiting body are concentrated without being impaired.

In step S1, the fruiting body is dried by hot air at 40 °C to 80°C, preferably 50 °C to 70 °C in a hot air dryer until the water content contained in the fruiting body is reduced to 5% to 30%, preferably 8% to 20% to obtain a dried fruiting body. Since the water content of mushroom fruiting body before drying is generally 90% to 96%, the active ingredient of dried mushroom fruiting body should be concentrated 2.5 to 11 times, or 3 to 8 times. As the edible mushrooms used in the present invention, Pleurotus cornucopiae, Flammulina velutipes, Pleurotus eryngii, Lentinula edodes, Coprinus comatus, Straw mushroom, White Maitake mushroom, Agitake mushroom, Pleurotus djamor, Hericium erinaceus, and Phallus rubrovolvatus are suitable.

In step S2, the fruiting body dried and concentrated in step S1 is pulverized to a size of 0.05 mm to 3.5 mm, preferably 0.5 mm to 2 mm using a pulverizer, and the feedstock to be fed to the chicken is obtained. This pulverization step is carried out in order to efficiently absorb the useful components contained in the fruiting body into the body of the chicken.

Step S3 is a step to be carried out when the fruiting body used in steps S1 and S2 has a low ergothioneine content or when the cost of the fruiting body is high. In step S3, it is used as the additive for the feedstock by appropriately selecting from the Pleurotus cornucopiae extract concentrate solution containing ergothioneine obtained by concentrating the residual liquid used in the production of boiled Pleurotus cornucopiae 5 to 9 times, the ergothioneine-containing product produced using microorganism other than the fruiting body (Patent reference 7), and the low-priced ergothioneine-containing substance such as artificially synthesized ergothioneine.

It should be noted that the ergothioneine-containing substance produced by the microorganism other than the fruiting body has a problem that it is directly eaten by humans in terms of safety due to the existence of the risk of contamination during production. However, since ergothioneine binds to the transporter and is taken into the chicken body and transported to the egg, the contaminant cannot follow the same route as ergothioneine, and only ergothioneine is transported to the egg. Therefore, it becomes possible for humans to eat chicken eggs to which ergothioneine has been transferred from such ergothioneine-containing substances.

In step S4, the feedstock produced by the fruiting bodies obtained in steps S1 and S2 is blended with 110 g of the general feed for chickens in an amount of 1 g to 5 g, preferably 2 g to 3 g and fed to chickens. If necessary, the ergothioneine-containing substance selected in step S3 is added to chickens by blending 2 cc to 4 cc, preferably 3 to 3.5 cc with 110 g of the general feed for chickens. In addition, only the blended feed of the feedstock produced by the fruiting body can be given to the chicken, and both the blended feed of the feedstock produced by the fruiting body and the blended feed of the ergothioneine-containing substance can be given to the chicken.

As the feed feeding method, the blended feed of the feedstock produced by the fruiting body and the blended feed of the ergothioneine-containing substance may be separately fed to the chicken alternately every other day, it is also possible to blend 1/2 of the amount of the blended feed of the feedstock produced by the fruiting bodies and the blended feed of the ergothioneine-containing substance in each day and feed them at the same time every day. By using the ergothioneine-containing material, it becomes possible to supplement chicken eggs with ergothioneine using inexpensive feedstock without losing the merit of feeding the feedstock produced by fruiting bodies.

In step S5, ergothioneine is transferred to the chicken egg with the start of feeding of the feedstock, and NADH and the like generated due to the component derived from the fruiting body are contained in the chicken egg. By continuously feeding the feedstock at least once every day for 36 days or more, the increase in the concentration of ergothioneine is saturated in the chicken egg, and NADH and the like are contained in the chicken egg. At this point, the functional chicken egg of the present invention is obtained. It is considered that nicotinamide adenine dinucleotide (NAD+) is converted to NADH in chicken eggs by continuously feeding the feedstock for 36 days or more.

### [EXAMPLE 1]

The present invention will be described in detail below with reference to examples. In this example, the fruiting body of Pleurotus cornucopiae was used as the fruiting body as the raw material, and the fruiting body was concentrated by the lowest cost and drying without damaging the components.

The fruiting body of Pleurotus cornucopiae was dried with hot air at about 60 °C in the hot air dryer to reduce the water content contained in the fruiting body to about 13% to obtain the dried and concentrated fruiting body of Pleurotus cornucopiae (step S1 in FIG. 1). Next, the dry and concentrated Pleurotus cornucopiae fruiting body was pulverized to a size of about 1 mm using the pulverizer to obtain the pulverized fruiting body (step S2 in FIG. 1).

Since the dried Pleurotus cornucopiae is low in production and expensive at the moment, in this example, Pleurotus cornucopiae extract concentrate containing about 1,100 mg of ergothioneine in 1 liter of residual liquid by concentrating the residual liquid used for the production of boiled Pleurotus cornucopiae about 8 times was selected as the additive of the feedstock (step S3 in FIG. 1).

The Pleurotus cornucopiae pulverized fruiting body and the Pleurotus cornucopiae extract concentrate were used as the feedstock for feed to chickens. About 2.5 g of the pulverized fruiting body was blended with 110 g of the general feed for chickens, and about 3 cc of the Pleurotus cornucopiae extract concentrate was blended with 110 g of the general feed for chickens. The pulverized fruiting body and the Pleurotus cornucopiae extract concentrate blended in the general feed for chickens were separately fed to the chickens alternately every other day for a total of 36 days (step S4 in FIG. 1). The feed thus produced was continuously fed to chickens for 36 days, and then eggs were collected (step S5 in FIG. 1). Ergothioneine, NADH and the like are contained in the collected chicken eggs.

### [EXAMPLE 2]

Using chickens of the same breed and the same age, the components of the chicken egg (hereinafter referred to as "general chicken egg") produced by chickens fed the general feed for chickens that does not contain the Pleurotus cornucopiae pulverized fruiting body and the Pleurotus cornucopiae extract concentrate and the chicken egg (hereinafter "functional chicken egg") obtained in Example 1 were compared. Using 5 each of the general chicken eggs and 5 the functional chicken eggs, the general chicken egg mixture and the functional chicken egg mixture were prepared by mixing the egg white and the egg yolk of the contents taken out by breaking each shell, and the components were compared.

Egg components are separated and taken out from each of the general egg mixture and the functional egg mixture by a migration time (MT) using a capillary electrophoresis device (CE device). Next, the components separated by the CE device are sent to a time-of-flight mass spectrometer (TOF / MS device) for more precise separation and precise measurement, the TOF / MS device ionizes the egg component and accelerates the ions with the electric field inside the TOF / MS device. The ions receive an acceleration in an electric field according to the mass-to-charge ratio (m / z: m is the mass of the ion and z is the charge of the ion). The substances contained in chicken eggs are precisely sorted by the difference in m / z according to the flight time to reach the ion detector in the TOF / MS device. The ion detector of the TOF / MS device measured the separated ionic strength to obtain a measured value (peak area) proportional to the content of each substance contained in the chicken egg. The peak area for each mass-to-charge ratio obtained by the measurement of the TOF / MS device was compared with the database that collected the peak area for each mass-to-charge ratio of known human metabolites, and Table 1 shows the names of the substances identified as having the closest measurement error within ± 30 seconds at MT and ± 10 ppm at m / z. Table 1 shows a value comparing the average value of the content of NADH and the like contained in the functional chicken egg with the average value of the content of the substance contained in the general chicken egg.

**[Table 1]**

| substance contained in chicken egg | electrophoresis device | time-of-flight mass spectrometer | | | |
|---|---|---|---|---|---|
| | MT (migration time) | m/z (mass-to-charge ratio) | peak area | | |
| | | | general chicken egg | functional chicken egg | area ratio |
| NADH | 664.12 | 8.130 | undetected | 1.6E-05 | - |
| Glycerophosphocholine | 258.11 | 24.750 | 4.0E-03 | 8.2E-03 | 2.0 |
| Thiamine | 265.11 | 7.286 | 4.9E-04 | 9.4E-04 | 1.9 |
| GABA | 104.07 | 8.516 | 1.6E-04 | 2.96-04 | 1.8 |
| Glycyl-glycine | 133.06 | 9.290 | 1.5E-04 | 2.7E-04 | 1.8 |

As shown in Table 1, NADH, which was not detected in the general chicken egg, was detected only in the functional chicken egg. In the content comparison values of Glycerophosphocholine, Thiamine (vitamin B1), GABA, and Glycyl-glycine of the general chicken egg and the functional chicken,
the content of Glycerophosphocholine in the functional chicken egg is 2.0 times that of the general chicken egg,
the content of Thiamine (vitamin B1) in the functional chicken egg is 1.9 times that of the general chicken egg,
the GABA content of the functional chicken egg is 1.8 times that of the general chicken egg, and
the content of Glycyl-glycine in the functional chicken egg is 1.8 times that of the general chicken egg.

Although it was confirmed that NADH was contained in the CE-TOF / MS (capillary electrophoresis-time-of-flight mass spectrometer) used, the content of NADH and the like in chicken eggs could not be accurately measured. Therefore, the components of the chicken egg are separated by the CE device, the chicken egg components are ionized by the TOF-MS device, the substances contained in the chicken egg are separated according to the mass-to-charge ratio of the ions, the separated ionic strength is measured, and the content comparison value of the general chicken egg and the functional chicken egg is calculated based on the measured value (peak area) proportional to the content of each substance contained in the chicken egg.

### [EXAMPLE 3]

The egg white and egg yolk of the contents obtained by breaking the shell of the chicken egg obtained in Example 1 were freeze-dried by a freeze-drying pulverizer and then pulverized to obtain a powdered chicken egg (hereinafter referred to as "powdered chicken egg"). This powdered chicken egg was used in Test Example 1. In this example, the chicken eggs were dried using a freeze-dryer, but other drying methods such as spray drying may be used.

### [Test Example 1]

A healthy mouse and a liver dysfunction model mouse were produced, and the powdered chicken egg obtained in Example 3 was fed to the mouse, and the liver function indexes AST and ALT were measured to carry out an effect test for improving liver dysfunction. The mice were used in the 4th week after birth of CD1 (ICR), and the mice were divided into 6 test groups, and 10 mice were tested in each test group, for a total of 60 mice.

Test Group 1 (con) was a healthy mouse without hepatic dysfunction, and this mouse was fed a commonly used feed (LabDiet5001, trade name) for 9 weeks. Test Group 2 (injury), Test Group 3 (1X), Test Group 4 (2X), Test Group 5 (5X), and Test Group 6 (sily) are all mice having liver dysfunction, and these mice were administered 20% carbon tetrachloride 1 mL / kg twice a week for 8 weeks, for a total of 16 times.

For each of the liver dysfunction mice in Test Groups 3, 4 and 5, the powdered chicken eggs obtained in Example 3 were dissolved in 2 mL of pure water, and 0.099 g, 0.198 g and 0.495 g per day were applied for 9 weeks. The amount of powdered chicken eggs fed to mice with hepatic dysfunction is 0.099 g, which is the equivalent of two standard human-eating eggs converted into mice, based on the conversion ratio generally used in liver function clinical trials for humans. For the hepatic dysfunction mice in Test Group 6, 50 mg of the hepatic function improving drug silymarin was dissolved in 5 mL of pure water per day and administered by diameter for 9 weeks.

In addition, only normal feed was fed to the liver dysfunction mice in Test Group 2 (injury).

After 9 weeks, blood was collected from the mice in each test group, and the values of AST and ALT, which are generally used as indexes for evaluating liver function, were measured.

Table 2 shows the average values of AST and ALT measurements of mice in each test group, and the improvement rate of the liver function index AST and ALT of the mice of Test Group 3, Test Group 4, Test Group 5, and Test Group 6 for the liver dysfunction mouse of Test Group 2 (injury).

**[Table 2]**

| Test Group | AST (U/L) | AST improvement rate | ALT (U/L) | ALT improvement rate |
|---|---|---|---|---|
| con | 52.4 | - | 47.8 | - |
| injury | 216.3 | - | 126.4 | - |
| 1X | 188.3 | 12.9% | 110.7 | 12.4% |
| 2X | 151.9 | 29.8% | 100.5 | 20.5% |
| 5X | 103.8 | 52.0% | 54.8 | 56.6% |
| sily | 58.0 | 73.2% | 45.3 | 64.2% |

As shown in Table 2, the AST improvement rate was 12.9% in Test Group 3 (1X), 29.8% in Test Group 4 (2X), and 52.0% in Test Group 5 (5X), the ALT improvement rate was 12.4% in Test Group 3 (1X), 20.5% in Test Group 4 (2X), and 56.6% in Test Group 5 (5X), and it was confirmed that ingestion of the functional chicken egg of the present invention greatly improved liver dysfunction. The AST improvement rate of the mice in Test Group 6 (sily) was 73.2%, and the ALT improvement rate was 64.2%.

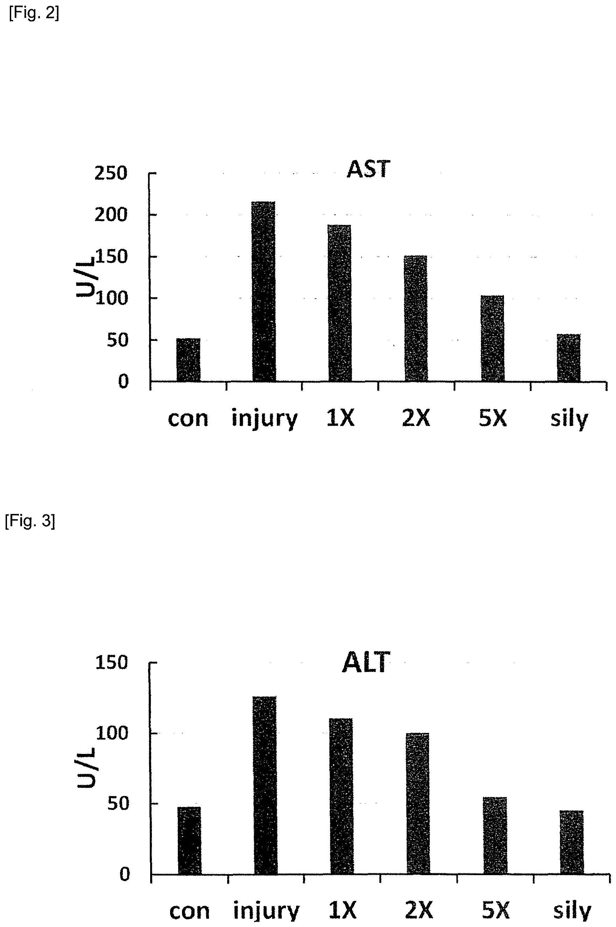

The measured values of each liver function index AST and ALT in Test Group 1 (con), Test Group 2 (injury), Test Group 3 (1X), Test Group 4 (2X), Test Group 5 (5X), and Test Group 6 (sily) are shown in the graph, FIG. 2 shows the AST measured value, and FIG. 3 shows the ALT measured value.

As shown in FIGS. 2 and 3, the liver function indexes AST and ALT values of the liver dysfunction mice in Test Group 3 (1X), Test Group 4 (2X), and Test Group 5 (5X) were improved in mice that feed more powdered eggs, compared with the liver dysfunction mice in Test Group 2 (injury) fed only normal diet, it was confirmed that the values were close to those of the mice in Test Group 6 (sily) to which Silymarin was administered. In other words, it can be confirmed that the liver dysfunction mice in Test Groups 3 to 5 are improved as the feeding amount of the functional chicken egg of the present invention is increased.

### [Test Example 2]

A Japanese woman in her 50s, who had been suffering from severe "chronic urticaria" for more than 40 years, continued to eat about four eggs, a total of two chicken eggs per day obtained in Example 1 and "tamagoyaki" made using these eggs, every day. As a result, it was confirmed that the symptoms of urticaria were alleviated about 5 months after the start of eating, and that the symptoms were almost completely cured about 2 years later.

### [Test Example 3]

A questionnaire survey to improve their rough hands was conducted on a total of 78 Japanese people (people without egg allergies) in their teens to 70s, including 84 years old, who are suffering from rough hands, dryness, and itching. Each person continued to eat the chicken eggs obtained in Example 1 every day for two months, two eggs per day. As a result, it was confirmed that 67 people had a good effect of improving rough hands, dryness, itchiness, etc., and 11 people did not show any improvement.

It cannot be clearly confirmed why the mice shown in Test Examples 1, 2 and 3 were effective in improving liver dysfunction, urticaria, rough hands and the like. However, it can be confirmed that these substances / components act on the improving effect of liver dysfunction and the like, by comparing the components of Example 2 showing that the substance contained only in the functional egg and a plurality of substances / components contained in the functional egg as compared with the general egg are present in the functional egg of the present invention.

### INDUSTRIAL APPLICABILITY

Since the functional chicken egg of the present invention contains useful ingredients such as ergothioneine and NADH, it can be expected to improve the symptoms of liver dysfunction and urticaria by eating it on a daily basis. Further, the functional chicken egg of the present invention can be suitably used for processed foods made from chicken eggs.

### DESCRIPTION OF REFERENCE NUMELALS

S1 Drying/concentration step
S2 Pulverization step
S3 Additive selection step
S4 Blending/fodder feeding step
S5 Component transfer/egg collection step

## Claims

1. A functional chicken egg produced from a chicken that has been fed a feedstock containing ergothioneine, wherein the egg contains 5-20 µ/g of the ergothioneine and reduced nicotinamide adenine dinucleotide (NADH).

2. The functional chicken egg according to claim 1, wherein the feedstock is dried and pulverized fruiting body of an edible mushroom.

3. The functional chicken egg according to claim 1, wherein the feedstock is any of dried and pulverized fruiting body of an edible mushroom and a Pleurotus cornucopiae extract concentrate solution containing ergothioneine obtained by concentrating a residual liquid used in the production of boiled Pleurotus cornucopiae 5 to 9 times, the fruiting body and ergothioneine-containing product produced using microorganism other than the fruiting body, and the fruiting body and artificially synthesized ergothioneine-containing product.

4. The functional chicken egg according to any of claims 2 and 3, wherein the edible mushroom is a mushroom consisting of any one or more combinations selected from a Pleurotus cornucopiae, a Flammulina velutipes, a Pleurotus eryngii and a Lentinula edodes.

5. The functional chicken egg according to any of claims 1 to 4, wherein egg white and egg yolk of the functional chicken egg are freeze-dried and pulverized powders.

6. The functional chicken egg according to any of claims 1 to 5, wherein the functional chicken egg is suitable for food by people with liver dysfunction.

7. A processed food is made from the functional chicken egg according to any of claims 1 to 5.

8. A method for producing a functional chicken egg comprising the steps of:
producing a mixed feed in which 1 g to 5 g of a feedstock containing ergothioneine is mixed with 110 g of a general feed for a chicken, the feedstock containing ergothioneine obtained by drying and pulverizing fruiting body of an edible mushroom, and
feeding the mixed feed to the chicken every day for 36 days or longer to obtain a chicken egg containing 5-20 µ/g of the ergothioneine and reduced nicotinamide adenine dinucleotide (NADH).

9. A method for producing a functional chicken egg comprising the steps of:
producing a mixed feed in which 1 g to 5 g of a feedstock containing ergothioneine is mixed with 110 g of a general feed for a chicken, the feedstock containing ergothioneine obtained by drying and pulverizing fruiting body of an edible mushroom,
producing a mixed feed in which 2 cc to 4 cc of a Pleurotus cornucopiae extract concentrate solution is mixed with 110 g of a general feed for a chicken, the Pleurotus cornucopiae extract concentrate solution containing ergothioneine obtained by concentrating a residual liquid used in the production of boiled Pleurotus cornucopiae 5 to 9 times, and
feeding each mixed feed to the chicken every day for 36 days or longer at the same time or feeding each mixed feed to the chicken separately and alternately every other day for 36 days or longer to obtain a chicken egg containing 5-20 µ/g of the ergothioneine and reduced nicotinamide adenine dinucleotide (NADH).
